Europäisches Patentamt

European Patent Office

Office européen des brevets

(19)

(11) Publication number:

**0 284 340**
**A2**

# (12) EUROPEAN PATENT APPLICATION

(21) Application number: 88302488.7

(22) Date of filing: 22.03.88

(51) Int. Cl.⁴: **C 08 L 83/07**
C 10 M 107/00, H 01 B 3/46

(30) Priority: 24.03.87 JP 69593/87

(43) Date of publication of application:
28.09.88 Bulletin 88/39

(84) Designated Contracting States: DE FR GB

(71) Applicant: Shin-Etsu Chemical Co., Ltd.
6-1, Otemachi 2-chome
Chiyoda-ku Tokyo 100 (JP)

(72) Inventor: Mori, Shigeru
1748-1, Haraichi
Annaka-shi Gunma-ken (JP)

Takahashi, Takayuki
203-5, Oaza Kamitakata Myogi-machi
Kanra-gun Gunma-ken (JP)

(74) Representative: Bizley, Richard Edward et al
BOULT, WADE & TENNANT 27 Furnival Street
London EC4A 1PQ (GB)

(54) A silicone grease composition.

(57) A silicone grease composition comprising a vinyl-containing organopolysiloxane fluid, platinum or a platinum compound such as chloroplatinic acid and a thickening agent such as a finely divided silica filler. By virtue of this unique formulation, the silicone grease composition is self-extinguishable when it is set on fire so that it is useful as a filling material for electric cables.

EP 0 284 340 A2

## Description

<u>A SILICONE GREASE COMPOSITION</u>

The present invention relates to a silicone grease composition or, more particularly, to a fire-resistant and self-extinguishable silicone grease composition imparted with decreased inflammability and useful as a filling material for electric cables including those for connection of electric instruments, underground communication cables, loose-type optical fibers and the like.

Needless to say, various kinds of grease compositions are widely used in household electric appliances, communication cables and the like including mineral oil-based greases, synthetic oil-based greases, silicone-based greases and others. While fire resistance or flame retardancy is very essential in greases used in such applications, most of the mineral oil-based greases are inflammable and silicone-based greases prepared from a silicone fluid of low viscosity, e.g., 30 centistokes or below, as the base oil are also inflammable. Silicone greases prepared from a silicone fluid of medium or high viscosity as the base oil are flame retardant but still not self-extinguishable.

A proposal has been made in Japanese Patent Kokai 57-28157 for a self-extinguishable silicone grease prepared by admixing a flame retardant agent and a silicone fluid as the base oil, the flame retardant agent being miscible with the base oil. This silicone grease is also not quite satisfactory because the silicone fluid as the base oil is not self-extinguishable. Accordingly, it is eagerly desired to develop a self-extinguishable silicone grease which can be used as a reliable filling material of communication cables in view of the chaotic troubles in the telephone system which resulted from a fire in the underground communication cables in 1984 in Tokyo.

The silicone grease composition of the present invention comprises, in admixture:

(a) 100 parts by weight of an organopolysiloxane having a viscosity in the range from 10 to 1,000,000 centistokes at 25°C represented by the average unit formula

$$R_aSiO_{(4-a)/2}, \quad \ldots\ldots (I)$$

in which R is a monovalent hydrocarbon group or a halogen-substituted monovalent hydrocarbon group and the subscript a is a positive number in the range from 2 to 3, from 0.1 to 30% by moles of the groups denoted by R being vinyl groups;

(b) from 0.001 to, preferably, 0.1 part by weight of platinum or a platinum compound; and

(c) from 5 to 50 parts by weight of a thickening agent.

The silicone grease of the present invention, of which the essential ingredients are the components (a), (b) and (c) given above, contains the unique combination of the very specific organopolysiloxane fluid having vinyl groups as the component (a) and platinum or a platinum compound as the component (b). This combination imparts the silicone grease composition with self-extinguishability without significantly affecting the properties inherent in silicone grease compositions such as heat and cold resistance, electric properties, water repellency, sealability and the like and further decreases the volume of toxic gases produced when the grease is set on fire.

The component (a) is an organopolysiloxane represented by the average unit formula

$$R_aSiO_{(4-a)/2},$$

in which R is a monovalent hydrocarbon group or a halogen-substituted monovalent hydrocarbon group. The monovalent hydrocarbon group is exemplified by alkyl groups, e.g., methyl, ethyl, propyl and butyl groups, cycloalkyl groups, e.g., cyclohexyl group, alkenyl groups, e.g., vinyl and allyl groups, and aryl groups, e.g., phenyl and tolyl groups. The halogen (e.g. chlorine or fluorine)-substituted monovalent hydrocarbon group, which is obtained by replacing a part or all of the hydrogen atoms in the above named hydrocarbon groups with halogen atoms, is exemplified by chloromethyl and 3,3,3-trifluoropropyl groups.

It is essential that from 0.1 to 30% by moles of the groups denoted by R in a molecule are vinyl groups. When the molar content of vinyl groups is too small, insufficient self-extinguishability is imparted to the grease composition. When the molar content of vinyl groups is too large, on the other hand, the grease composition may be somewhat poor in the heat resistance. The subscript a in the above given average unit formula is a positive number in the range from 2 to 3. The organopolysiloxane fluid as the component (a) in the inventive silicone grease composition should have a viscosity in the range from 10 to 1,000,000 centistokes or, preferably, from 50 to 500,000 centistokes at 25°C. When the viscosity of the organopolysiloxane fluid is too low, the grease composition prepared therefrom has poor stability as a grease with eventual separation of the base oil. When the viscosity of the organopolysiloxane fluid is too high, on the other hand, the grease prepared therefrom is poorly workable due to the excessively stiff consistency thereof.

The component (b) in the inventive silicone grease composition is platinum or a platinum compound which serves to impart self-extinguishability to the grease composition. Elementary platinum such as platinum black or a platinum compound such as chloroplatinic acid are suitable for the purpose. It is preferable to use a platinum compound, especially one soluble in or compatible with the organopolysiloxane, for example those used in organosilicone chemistry for catalytically promoting the addition reaction between a vinyl-containing organopolysiloxane and an organohydrogenpolysiloxane. The amount of platinum or a platinum compound as the component (b) in the inventive silicone grease composition is in the range from 0.001 to, preferably, 0.1 part by weight or, preferably, from 0.002 to 0.02 part by weight calculated as platinum per 100 parts by weight of the organopolysiloxane fluid as the component (a). When the amount thereof is too small, insufficient self-extinguishability is imparted to the silicone grease composition. On the other hand, no further additional improvement can be obtained in the self-extinguishability of the grease composition by increasing the amount of the component (b) over the above mentioned upper limit.

The component (c) in the inventive grease composition is a thickening agent which may, for example, be any known one conventionally used in various grease compositions. In particular, the thickening agent as the component (c) may be selected from inorganic ones, for example silica, alumina, iron oxide, zinc oxide or carbon, optionally, surface-treated with an organosilane compound, e.g., an alkoxy silane compound, low-molecular organopolysiloxane terminated at the molecular chain ends with silanolic hydroxy groups, or an organic amine or organoboron compound and the like.

The silicone grease composition of the present invention can be prepared by uniformly mixing together the above described components (a), (b) and (c) each in a calculated and weighed amount. It is of course optional that the composition is further admixed with various kinds of additives, e.g., antioxidants conventionally used in grease compositions. These ingredients are mixed and thoroughly kneaded together by using a three-roller mill or colloid mill, for example, with heating or under reduced pressure according to need until the composition has a grease-like consistency.

Being prepared from an organopolysiloxane as the base oil, the silicone grease composition of the invention has the properties inherent in silicone fluids such as heat and cold resistance, electric properties, water repellency and sealability, for example. In addition, the grease composition is imparted with high self-extinguishability by the addition of platinum or a platinum compound. Accordingly, the silicone grease composition of the invention is particularly useful as a filling material of communication cables including optical fibers.

In the following, the silicone grease composition of the invention is described in more detail by way of examples, in which the term of "parts" always refers to "parts by weight" and the values of viscosity are obtained by the measurement at 25°C.

The inflammability of the silicone grease compositions prepared in the following examples was evaluated by a burning test carried out in the following manner. A glass fiber sleeve of 2 mm diameter and 50 mm length filled with the grease composition was vertically hung and the lower end thereof was put into the flame of an alcohol lamp for 15 seconds to start burning of the sleeve. Thereafter, the alcohol lamp was removed away and records were made of the length of time from that moment until the flame went out when burning of the sleeve did not continue.

Examples 1 to 7 and Comparative Examples 1 to 5.

In each of these Examples and Comparative Examples, 100 parts of an organopolysiloxane fluid were mixed together with an octyl alcohol solution of chloroplatinic acid in a concentration of 2% by weight as platinum in an amount indicated in the table below and fine silica filler of the kind shown below in an amount indicated in the table,and the mixture was kneaded on a three-roller mill to give a silicone grease composition. The organopolysiloxane fluids used in these experiments were characterized as follows.

Example 1: dimethylpolysiloxane fluid having a viscosity of 50 centistokes, of which the content of vinyl groups was 5.0% by moles of the overall organic groups

Example 2: dimethylpolysiloxane fluid having a viscosity of 60 centistokes, of which the content of vinyl groups was 3.0% by moles of the overall organic groups

Example 3: dimethylpolysiloxane fluid having a viscosity of 500 centistokes, of which the content of vinyl groups was 10.0% by moles of the overall organic groups

Example 4: methyl phenyl polysiloxane fluid having a viscosity of 700 centistokes, of which the contents of phenyl groups and vinyl groups were each 5.0% by moles of the overall organic groups

Example 5: methyl phenyl polysiloxane fluid having a viscosity of 1000 centistokes, of which the contents of phenyl groups and vinyl groups were 5.0% by moles and 0.1% by moles, respectively, of the overall organic groups

Example 6: dimethylpolysiloxane fluid having a viscosity of 100,000 centistokes, of which the content of vinyl groups was 20.0% by moles of the overall organic groups

Example 7: dimethylpolysiloxane fluid having a viscosity of 500,000 centistokes, of which the content of vinyl groups was 30.0% by moles of the overall organic groups

Comparative Example 1: dimethylpolysiloxane fluid having a viscosity of 50 centistokes, of which the content of vinyl groups was 0.05% by moles of the overall organic groups

Comparative Example 2: dimethylpolysiloxane fluid having a viscosity of 500 centistokes, of which the content of vinyl groups was 5.0% by moles of the overall organic groups

Comparative Example 3: methyl phenyl polysiloxane fluid having a viscosity of 1000 centistokes, of which the contents of phenyl groups and vinyl groups were 5.0% by moles and 25.0% by moles, respectively, of the overall organic groups

Comparative Example 4: dimethylpolysiloxane fluid having a viscosity of 500 centistokes and containing no vinyl groups

Comparative Example 5: dimethylpolysiloxane fluid having a viscosity of 700 centistokes, of which the content of vinyl groups was 10.0% by moles of the overall organic groups

The following four finely divided silica fillers were used in the formulations.

I: a fumed silica filler, Aerosil 200, manufactured by DEGUSSA Co., West Germany

0 284 340

II: a fumed silica filler surface-treated with hexamethyl disilazane and admixed with 0.5 % by weight of an antioxidant (Ionox 220, manufactured by Shell Petroleum Co.)
III: a fumed silica filler surface-treated with diphenyl silane diol
IV: finely divided silica filler, R-972, manufactured by DEGUSSA Co., West Germany
The table given below summarizes the amount of the platinum compound in the form of a solution, kind and amount of the silica filler as the thickening agent, consistency of the grease compositions as worked and time for self-extinguishment in the inflammability test.

T a b l e

|  |  | Solution of platinum compound, parts, as platinum | Thickening agent | | Consistency of grease, worked | Time for self-extinguishment, seconds |
|---|---|---|---|---|---|---|
|  |  |  | Type | Parts |  |  |
| Example | 1 | 0.002 | I | 12 | 200 | 2 |
|  | 2 | 0.01 | I | 5 | 301 | ‹1 |
|  | 3 | 0.08 | II | 50 | 180 | ‹1 |
|  | 4 | 0.015 | II | 18 | 360 | ‹1 |
|  | 5 | 0.08 | III | 15 | 220 | 5 |
|  | 6 | 0.01 | IV | 10 | 350 | ‹1 |
|  | 7 | 0.02 | IV | 10 | 380 | ‹1 |
| Comparative Example | 1 | 0.0005 | I | 12 | 205 | Burning continued |
|  | 2 | 0.0008 | III | 15 | 225 |  |
|  | 3 | 0.0005 | IV | 10 | 420 |  |
|  | 4 | 0.01 | II | 40 | 210 |  |
|  | 5 | 0 | III | 15 | 215 |  |

Claims

1. A silicone grease composition which comprises, in admixture:
    (a) 100 parts by weight of an organopolysiloxane having a viscosity in the range from 10 to 1,000,000 centistokes at 25° C represented by the average unit formula
        $R_aSiO_{(4-a)/2}$.
    in which R is a monovalent hydrocarbon group or a halogen-substituted monovalent hydrocarbon group and the subscript a is a positive number in the range from 2 to 3, from 0.1 to 30% by moles of the groups denoted by R being vinyl groups;

4

0 284 340

(b) platinum or a platinum compound in an amount of at least 0.001 part by weight as platinum; and
(c) from 5 to 50 parts by weight of a thickening agent.

2. A silicone grease composition as claimed in claim 1 wherein the group denoted by R is methyl, vinyl or phenyl.

3. A silicone grease composition as claimed in claim 1 or claim 2 wherein the thickening agent is a finely divided silica powder.

4. A silicone grease composition as claimed in any one of the preceding claims wherein the component (b) is chloroplatinic acid.

5. A silicone grease composition as claimed in any one of the preceding claims wherein the platinum or the platinum compound is in an amount of not more than 0.1 part by weight as platinum.

6. The use of a composition as claimed in any one of the preceding claims as an electric insulating oil.

7. A communication cable, for example a telephone or optical cable, or an electric cable containing a composition as defined in any one of claims 1 to 5.